# EUROPEAN PATENT APPLICATION

(11) **EP 2 454 953 A2**
(43) Date of publication of application: **23.05.2012**
(21) Application number: 11005325.3
(22) Date of filing: 29.06.2011
(51) Int. Cl.: A23L 3/3427, A23L 3/3418, B65D 81/26, B65D 81/28, A23B 4/16, A23L 3/3445, B65B 31/02

(54) **Method for reducing headspace and modifying atmosphere in a food package**

(30) Priority: 29.06.2010 US 825990
(71) Applicant: Paper-Pak Industries, Laverne, CA 91750 (US)
(72) Inventor: Jensen, Roland, Chicago Illinois 60611 (US); Versteylen, Sayandro, Fontana California 92336 (US); Riehle, Lindsay A, Beaumont California 92223 (US)
(74) Representative: Bucks, Teresa Anne

(57) **Abstract**

Methods are disclosed of assembling a food package using an absorbent pad having an active agent that generates an atmosphere-modifying gas into the headspace after the food package is sealed, to compensate for losses of atmosphere-modifying gases injected in the food package prior to sealing. The methods of assembly reduce the headspace requirements and overall dimensions of the food package. The methods further prevent or reduce collapse of the food package or having the lid film contact the food product.

## Description

### BACKGROUND OF THE DISCLOSURE

### 1. Field of the Disclosure

The present disclosure provides a method of assembling a food package that prevents collapse of the headspace in a food package and reduces the amount of gases inserted into the package headspace during assembly and modifies the atmosphere therein.

### 2. Description of the Related Art

Modified Atmosphere Packaging (MAP) is a technique that modifies the atmospheric gases in a retail food package to preserve food freshness, extend shelf life, and enhance food appearance. MAP generally involves altering the ratio of natural atmospheric gases within the food package (O₂, N₂, and CO₂), water vapor, and, in the case of fresh produce, controlling levels of a fourth gas, ethylene. Altering O₂/CO₂ ratios by MAP can be used to inhibit microbial respiration. Removal of O₂ slows the growth of aerobic microorganisms, lipid oxidation, and pigment oxidation. Elevation of CO₂ levels can retard microbial growth and some enzymatic activity, and reduce moisture loss from the food.

In recent years, MAP has been increasingly used. When MAP is used, the packager generally has one opportunity to modify the atmosphere in the package (for instance, by injecting CO₂ into the package headspace), before the package is sealed. After this initial injection of MAP gas into the headspace of the food package, the volume of the MAP gas inside of a sealed food package gradually depletes over time.

Anticipating these losses, conventional MAP techniques generally require the operator to inject large volumes of MAP gases in the headspace of the food package prior to sealing, and, thus, food packages are required to be much larger than the food product enclosed. This results in the need for a large headspace. Thus, wasted space results to store, ship, and display the food product.

In addition, loss of gas volume inside of a food package can cause the food package to collapse inward, providing a food package that is visually unappealing to consumers. If enough internal gas pressure is lost, the lid film can begin to adhere to the surface of the food product, reducing consumer appeal and making the food product more susceptible to "freezer burn."

Also, conventional MAP techniques are made worse when the food package uses a "biofriendly" lid film, which are generally not as elastic or stretchable as conventional lid film. Thus, the MAP gases are required to be injected at high pressures to keep a "bubble" pressure against the lid film.

Further, conventional MAP techniques may have a higher failure rate for "biofriendly" food trays, such as those made of PET (polyethylene), since glues that adhere the lid film to the food tray tend not to stick as well to the biofriendly food trays as to conventional food trays.

Thus, conventional MAP techniques have two general technical problems - the gradual loss of the original injected MAP gases after the food package is sealed with no mechanism to replenish the loss of gas and also the need for a large initial volume. As noted above, both of these technical problems can be exacerbated when using a "biofriendly" lid film and/or food tray.

### SUMMARY OF THE DISCLOSURE

The present disclosure provides a method for assembling a food package having a lid film and an absorbent pad having an active agent that can supply and replenish levels of Modified Atmosphere Packaging (MAP) gas inside the food package after sealing.

The present method provides overall dimensions of the food package (i.e., the food tray and lid film) and headspace that can be reduced as much as about 20% as compared to conventional MAP methods.

### BRIEF DESCRIPTION OF THE DRAWINGS

Figures 1A and 1B are diagrams of methods for assembling a food package of the present disclosure.

Figure 2 is a perspective view of a food package assembled according to the method in Figs. 1A or 1B.

Figure 3 is a cross-section of the assembled food package of Fig. 2 along axis A - A.

Figure 4 is a schematic of an exemplary embodiment of a pad architecture for an absorbent pad that can be used in the method in Figs. 1A or 1B.

### DETAILED DESCRIPTION OF THE PREFERRED EMBODIMENTS

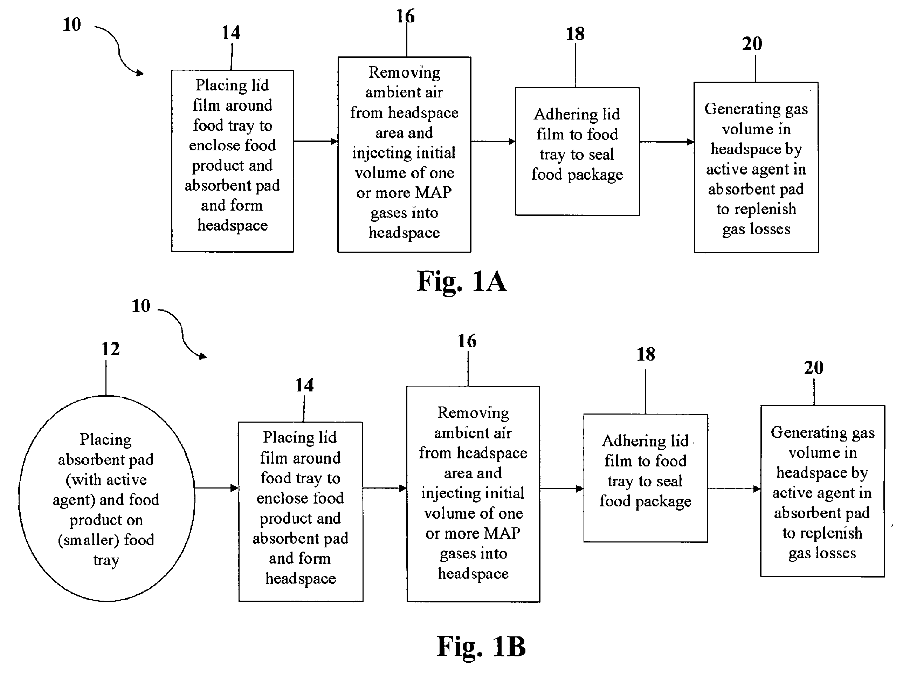

Referring to the drawings and, in particular, Figs. 1A and 1B, there are illustrated methods for assembling a food package, generally represented by reference number 10. Method 10 overcomes technical problems associated with conventional Modified Atmosphere Packaging (MAP) for preserving freshness and safety of packaged food products. Method 10 has an absorbent pad having an active agent placed inside the food package that can replenish the atmosphere-modifying gas, as well as gas volume, in the headspace area of the food package. This atmosphere-modifying gas generated by the active agent(s) in the absorbent pad provides a source of atmosphere-modifying gas(es) inside of the food package, thereby compensating for the gradual loss of the initial volume of MAP gas injected at the time of packaging the food product. Thus, using the present method, the initial injection of MAP gas required at the time of packaging can be smaller, thereby reducing headspace requirements and permitting a smaller food tray to be used, without any loss of effectiveness for food preservation. Also, replenishing the volume of atmosphere-modifying gas in the food package prevents or reduces the likelihood of collapse of the food package over time due to loss of internal gas volume.

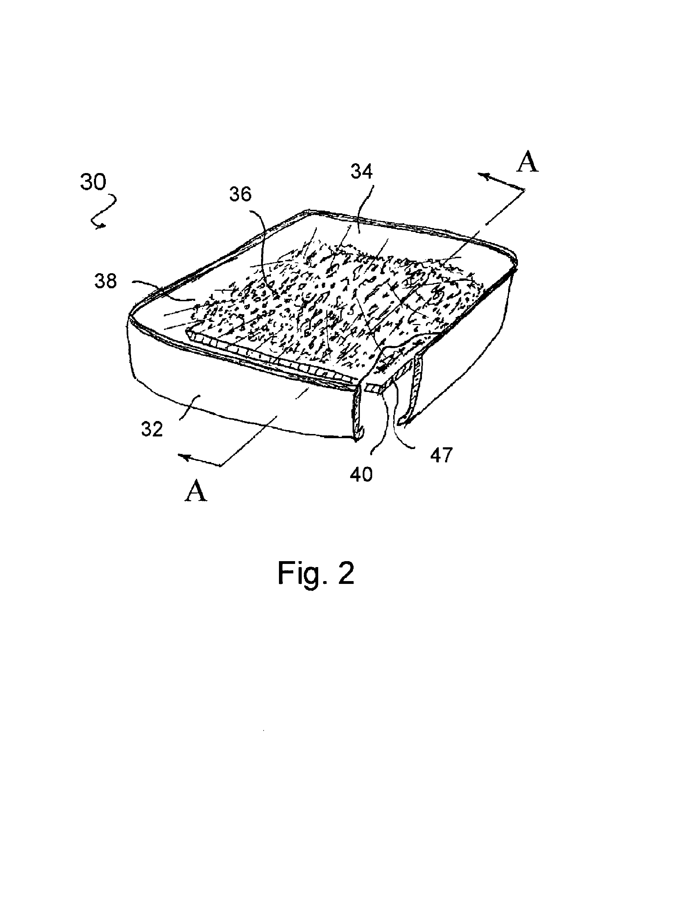

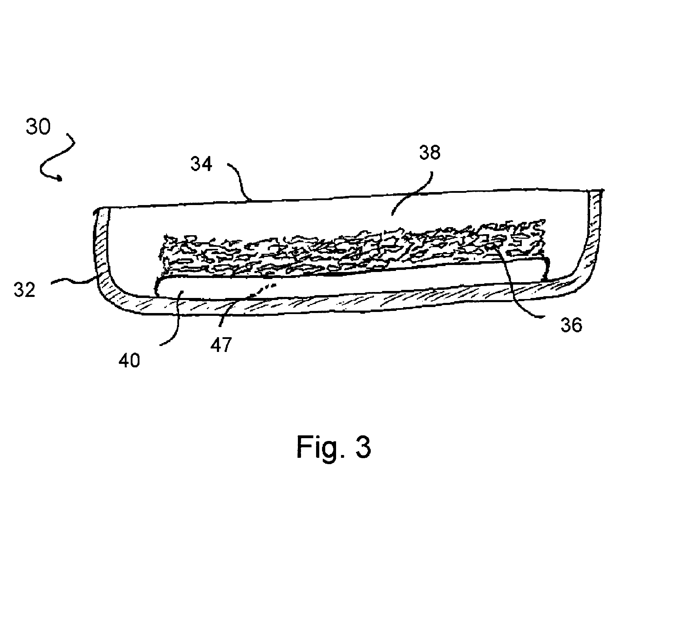

Referring to Figs. 2 and 3, an exemplary embodiment of a food package 30 assembled by method 10, and a cross-section of this embodiment along axis A - A are illustrated, respectively. In Fig. 2, a piece of the near corner of the food tray and lid film is cut away to reveal the interior structures. Food package 30 includes a food tray 32, lid film 34, food product 36, and absorbent pad 40. Absorbent pad 40 contains one or more active agent(s) 47, which can be selectively positioned in the pad architecture of the absorbent pad to regulate the activation and release of the MAP gas after food package 30 is sealed. Food tray 32 has an interior side and an exterior side.

Referring to Figs. 1A, 2 and 3, method 10 includes step 14 of placing lid film 34 to enclose food product 36 and absorbent pad 40, and contacting food tray 32 around a periphery of the food tray, thereby creating an enclosed headspace area 38 in food package 30.

Method 10 includes step 16 of removing and/or replacing a portion (or all) of the ambient air enclosed in headspace area 38. Removal of ambient air in headspace 38 can be by reduced pressure (vacuum) and/or by replacement by gas flushing with one or more atmosphere-modifying (MAP) gases. Removing a portion or all ambient air from headspace area 38 temporarily reduces the volume of air in the headspace area. An initial amount of one or more atmosphere-modifying (MAP) gases is injected into headspace area 38, so that the resulting gases (and/or their ratios) in the headspace area are different than for ambient air. Injection of the MAP gas can be at a greater pressure in headspace 38 than for ambient air, creating an internal gas pressure that pushes upward on lid film 34 to form a "bubble" (also called "dome" interchangeably herein) that deflects lid film 34 upward. An embodiment of a "bubble" created by method 10 is a deflection of lid film 34 that is nine (9) mm to twenty (20) mm above the horizontal plane across the top of food tray 32. Headspace 38 is a reservoir of MAP gas, which preserve food product 36, prolong shelf life, and/or enhance the attributes of food product 36 (including color, aroma, and/or overall appearance).

Method 10 includes step 18 of adhering lid film 34 to an exterior side of food tray 32 (such as by heat-sealing) that forms an airtight seal that completely encloses food product 36 and absorbent pad 40 in food package 30.

Conventional MAP techniques require extra volumes of MAP gas during the initial injection to compensate for gas losses due to adsorption/ absorption of MAP gases inside the food package over time. Such gas losses are caused by absorption/adsorption of gas on the surface of food product 36, dissolving gases in the liquid purge from food product 36, and/or leakage of MAP gases through lid film 34 or food tray 32 to escape food package 30. Method 10 requires a smaller initial headspace area 38 in food package 30 than is required with conventional MAP techniques. Method 10 also reduces "concave" packages (where the lid film deflects inward toward the food product) that can be the result from gas losses over time.

After sealing lid film 34 to food tray 32 with an airtight seal, method 10 includes step 20 of generating one or more atmosphere-modifying gases by activation of the active agents 47 in absorbent pad 40. The atmosphere-modifying gas(es) thus generated by absorbent pad 40 are released into headspace area 38 to replenish and replace MAP gases lost therein. The replenishment step maintains sufficient gas volume and pressure in headspace 38 to prevent weakening or collapse of food package 30, and to reduce or prevent any contact of lid film 34 with food product 36. In a preferred embodiment, lid film 34 does not contact food product 36.

As shown in Fig. 1B, method 10 can further include step 12 of placing food product 36 and absorbent pad 40 on the interior side of food tray 32.

Steps 12, 14, 16, and 18 of method 10 can be performed by a human operator or by a machine, or a combination of both. For example, gas flushing of headspace 38 (removing ambient air from the headspace and injecting MAP gases to replace it therein) can be performed by a human operator or by machine. An example of method 10 has a human operator who sets up a production line of machines that place absorbent pad 40 and food product 36 on food tray 32, place lid film 34 around food tray 32 to enclose food product 36 and absorbent pad 40, perform a gas flush of headspace area 38 to replace ambient air with MAP gases, and adhere lid film 34 to food tray 32 with an airtight seal to form food package 30.

As used herein, "lid film" is a barrier film or semi-barrier film having a low gas transmission rate that is used to enclose and seal a food package using MAP techniques.

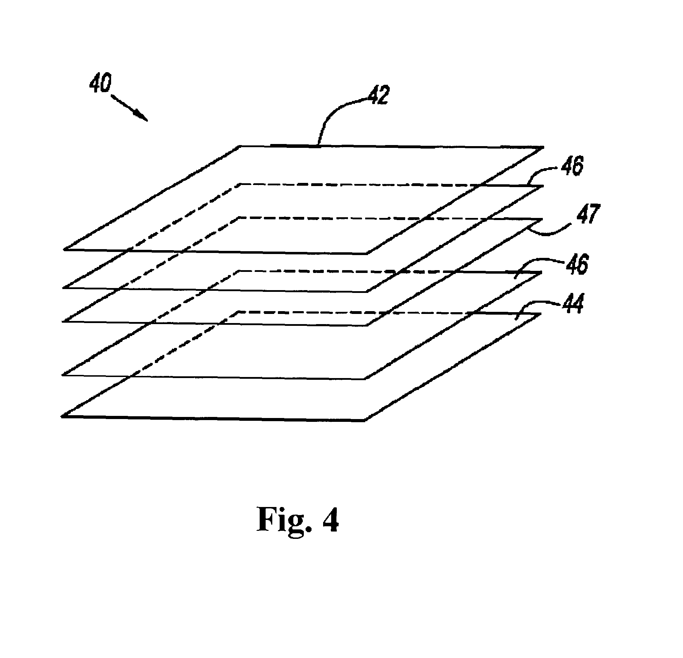

Referring to Fig. 4, an exemplary embodiment is provided of a pad architecture of absorbent pad 40 suitable for use in method 10. As used in this application, the "pad architecture" of an absorbent pad means the structure and order of individual layers of absorbent materials and active agents therein. Absorbent pad 40 has a top layer 42 for contact with food product 36, and a bottom layer 44 opposite top layer 42. A first layer 46 adjacent to top layer 42 and a second layer 46 adjacent to bottom layer 44 can form a pocket in which one or more active agents 47 is held. Each layer 46 can be formed of one or more individual or layers of a material, preferably tissue, placed on each other to form layer 46.

A "pocket," as used herein, means an area between two layers that can hold an active agent in position prior to use. For example, in another exemplary embodiment of absorbent pad 40, a pocket for active agents 47 can be formed between top layer 42 and bottom layer 44. In yet another exemplary embodiment, an absorbent pad having first layer 46 adjacent to top layer 42 can have a pocket formed between any of: top layer 42 and first layer 46, bottom layer 44 and first layer 46, and/or between top layer 42 and bottom layer 44. In these exemplary embodiments, each layer 46 can be formed of one or more individual or layers of a material, preferably tissue, placed on each other to form layer 46. The active agent(s) can be positioned in any pocket, and may be present in more than one pocket.

The pad architecture of absorbent pad 40 affects the performance of the active agent in food package 30. This performance depends not only on the active agents used, but also where the active agents are placed in absorbent pad 40 in relation to absorbent layers 46 and top and bottom layers 42, 44. Varying the pad architecture can regulate the length of time before active agent 47 is activated to generate the atmosphere-modifying gas, the rate at which that generated gas is released into headspace area 38. Also, the pad architecture can physically separate the individual chemical components of a system for delayed activation that can provide an "extended release" effect of an atmosphere-modifying gas into headspace area 38.

Top layer 42 of absorbent pad 40 is a film that is polyethylene, polypropylene, polyester, or any combinations thereof. Alternatively, top layer 42 can be a nonwoven material or coffee filter tissue (CFT), or other wet-strength paper. A preferred embodiment of top layer 42 is polyethylene film. Top layer 42 may be solid or perforated, and is preferably perforated to facilitate purge from food product 36 to get to absorbent layers 46.

Bottom layer 44 of absorbent pad 40 is a material that permits fluid uptake therethrough. Examples of bottom layer 44 include, but are not limited to, polyethylene film (which can be perforated to facilitate fluid strikethrough to absorbent layers 46), coffee filter tissue (which is about 99.5% or more of a cellulosic material, plus a small amount (about 0.5%) of water-strengthening resin to provide strength to the material when wet), and a nonwoven material treated with a surfactant (i.e., wetting agent). Bottom layer 44 can be made of any material that is porous to liquids and gases, while retaining any solid contents inside absorbent pad 40.

In all preferred embodiments, absorbent layer 46 is made of tissue. In a further exemplary embodiment of absorbent pad 40, active agent 47 is a carbon dioxide (CO₂)-generation system. An example of a CO₂ generation system that can be used with the present method is a mixture of an acid and a base, such as citric acid and sodium bicarbonate, respectively, that react to form CO₂. The acid may be an organic acid or an inorganic acid (including, but not limited to, boric acid) that is food-safe. In the exemplary embodiment in Fig. 4, both components that react together to form CO₂ are mixed together in the pocket formed between absorbent layers 46. The ratio and total amounts of acid and base are just one factor, along with the architecture of absorbent pad 40 and placement in the architecture, that can be selected to alter the amount of CO₂ gas released in food package 30. In one exemplary embodiment, a ratio of about 4:6 (citric acid:sodium bicarbonate) can be employed to release sufficient CO₂ gas for food preservation. Use of citric acid as an active agent in a CO₂ generation system provides an additional benefit, by interacting with the sodium ion of sodium bicarbonate to create a citric acid/sodium citrate buffer system that helps maintain a pH in the food package that is food-compatible. However, other acids and other ratios may be selected for a CO₂ generation system based on other factors, such as the pKₐ of the acid.

An example of active agent 47 is a CO₂ generation system that is a mixture of citric acid and sodium bicarbonate, which are mixed with cellulose to form one or more laminate layers that are placed in the pocket formed between absorbent layers 46. Incorporating the chemical components of the CO₂ generation system in one or more laminate layers permits a large amount of the CO₂ generation system to be used in absorbent pad 40 without compromising its function by having large amounts of loose chemicals collecting on one side or the other if the pad were picked up by an edge.

Scaling, i.e., selecting the proper amounts of active agent 47 to place in absorbent pad 40, starts with the amount of absorbent material, the type of food product 36 being packaged, and the amount of liquid purge exuded from the food. For example, if too much absorbent material is used relative to the amount of liquid purge, then there may be insufficient liquid to dissolve the active agent(s) so they can react to form the atmosphere-modifying gas. On the other hand, too little absorbent material can allow the liquid purge to "drown" or dilute the active agent(s) and thereby impair their effectiveness. For ground meat products, scaling is critical because ground meats produce very little liquid purge to activate the components of the CO₂-generating system.

In an exemplary embodiment, a total of about 3.8 grams of a CO₂-generation system is incorporated in one or more plies of a laminate layer placed in the pocket between tissue layers 46 in absorbent pad 40. For these embodiments, absorbent pad 40 has a nominal absorbency (i.e., the weight of liquid purge that can be absorbed) of about 35 grams to about 75 grams, and preferably about 50 grams to about 65 grams. In another exemplary embodiment, about 2.0 grams of a CO₂-generation system are incorporated in one or more plies of a laminate in absorbent pad 40, which is about 4 wt% based on a nominal absorbency of 50 grams, and about 3.1 wt% based on a nominal absorbency of 65 grams. The amount of CO₂ generated by this embodiment is sufficient to permit a reduction in headspace area 38 corresponding to a reduction in depth of food tray 32 from about two-and-a-half (2.5") to about two inches (2"), which is a reduction of approximately 20%.

As noted above, the disadvantages of conventional MAP techniques are exacerbated when certain "biofriendly" materials are used for lid film 34 and/or food tray 32. "Biofriendly" lid film tends to be less elastic than a conventional lid film. Therefore for the overwrap, and so a greater internal pressure of MAP gas is needed to "bubble" up against the overwrap. Using a larger total amount of a CO₂ generation system, such as 5 grams, can generate almost 750 cc of CO₂ gas that can exert a greater internal "bubble" pressure than the 570 cc of CO₂ gas that can be generated by 3.8 grams of CO₂ generation system (using the approximation that each 1 gram of CO₂-generating chemicals is able to generate about 150 cc of CO₂ gas). These large amounts of the CO₂-generating system can be effectively placed in absorbent pad 40 in two plies of a laminate material. Likewise, food trays 32 made of "biofriendly" materials such as PET (polyethylene) tend to adhere poorer to lid film 34, causing a greater loss of the initial injected MAP gas using conventional MAP technique. For such instances, using a larger amount of active agent 47 can replenish some or all of the loss of gas because of an imperfect seal about the periphery of food package 30.

Another embodiment of active agent 47 is an antimicrobial agent. An example of an antimicrobial agent in absorbent pad 40 is citric acid, sorbic acid, or a mixture thereof. However, any food-safe antimicrobial can be used, including other organic acids, quaternary ammonium compounds, inorganic acids (such as boric acid) or combinations of antimicrobials.

The atmosphere-modifying gases used in Modified Atmosphere Packaging (MAP) include nitrogen, oxygen, carbon dioxide, carbon monoxide, water vapor, or any combinations thereof.

Examples of food products 36 for which the present method can be used include, but are not limited to, turkey, chicken, pork, and beef. Any food product 38 may be a single piece (such as a turkey breast), several smaller pieces, or ground (such as ground turkey or ground sirloin). Ground food products have a very large surface area, and readily absorb/adsorb MAP gases and water vapor in the headspace, leading to loss of gas volume in the food package. In addition, certain food products, such as poultry, have a natural porosity that enhances their absorption of MAP gases such as CO₂. In such instances, a larger amount of active agent 47 may be required to replenish the loss of the original injection of MAP gases in the food package.

Absorbent food pads having active agents, such as those disclosed in U.S. Patent Application Serial No. 11/335,373, published as US 2006/0172048, are suitable for use in the present method, and the disclosure of such absorbent food pads is hereby incorporated by reference in the present application. Likewise, the absorbent pads with active agents and specific pad architectures disclosed in PCT/US2009/036442, published as WO 2009/111768, are suitable for use in the present method, and the disclosure of such absorbent food pads and architectures is hereby incorporated by reference.

Another exemplary embodiment of absorbent pad 40 has top layer 42 that is a perforated polyethylene film that is 0.65 mil, bottom layer 44 that is a nonwoven material that is 25 GSM (grams per square meter), three absorbent (3) tissue layers 46 that are adjacent to top layer 42, two absorbent (2) tissue layers 46 that are adjacent to bottom layer 44, and two (2) laminate layers containing a total of 3.8 grams of a CO₂-generation system and a cellulosic material placed between tissue layers 46.

Yet another exemplary embodiment of absorbent pad 40 has top layer 42 that is a perforated polyethylene film that is 0.65 mil, bottom layer 44 that is a nonwoven material that is 25 GSM, two (2) absorbent tissue layers 46 that are adjacent to top layer 42, two (2) absorbent tissue layers 46 that are adjacent to bottom layer 44, and two (2) laminate layers containing a total of 5.0 grams of a CO₂-generation system and a cellulosic material placed between tissue layers 46.

Still another exemplary embodiment of absorbent pad 40 has top layer 42 that is a polyethylene film that is 0.65 mil but not perforated, bottom layer 44 that is a nonwoven material that is 20 GSM, two (2) absorbent tissue layers 46 that are adjacent to top layer 42, two (2) absorbent tissue layers 46 that are adjacent to bottom layer 44, and one laminate layer containing the CO₂-generation system between tissue layers 46.

The present method considerably reduces gas injected into the food package as compared with conventional MAP techniques. Since the operator does not have to "overfill" the present food package with MAP gas using the present method, the food package itself does not require the headspace to be as large, permitting the overall dimensions of the food package to be reduced to more closely match the actual size of the food product. The present method thereby reduces costs of materials (tray, lid film, and/or pressurized gases), reduces freight costs, yet also allows smaller food packages that look better for consumer display and permit more packages to be displayed for sale, without any loss of effectiveness in food preservation. The method may also represent operational savings by reducing cycle times and increasing line speeds.

After sealing the food package, the volume of the injected MAP gas inevitably decreases over time, even if the seal is tight, due to adsorption or absorption of gas (such as CO₂) by the food product, to dissolution of MAP gases in the liquid purge, and/or leakage of MAP gases through the food tray or lid film 34 to the outside of the food package. The active agent(s), when activated, gradually release gases that occupy the headspace and partially or completely replace the loss of volume of the initial injected MAP gas. The replacement of gas volume in the headspace can reduce or even prevent collapse of the lid film that can make the food package feel "flimsy" when lifted by a consumer, and can also prevent the lid film 34 from contacting or adhering to the food product, which is unappealing to the consumer and can increase susceptibility of the food product to freezer burn.

The capability of the active agents to generate MAP gases also reduces the requirement for large headspaces for conventional MAP techniques that must compensate for gas losses over time. The amount of the active agent(s), their placement within the pad architecture, and their mechanism of activation can be selected to control the release rate of volume of MAP gases from the absorbent pad into the headspace. Thus, the present method provides the benefit that a food product can be packaged in a food package having a small headspace, having small overall dimensions, and a small injection gas volume, because the active agent(s) generates MAP gases in the headspace area to compensate for volume losses and chemical effects of the initial injected MAP gas.

The word "about" as used herein for dimensions, weights, weight-percentages, or measures of absorbency, means a range that is ± 10% of the stated value, more preferably ± 5% of the stated value, and most preferably ± 1% of the stated value, including all subranges therebetween.

As used herein, all references to the plural can also mean the singular and to the singular can also mean the plural, unless otherwise indicated.

It should be understood that the foregoing description is only illustrative of the present disclosure. Various alternatives and modifications can be devised by those skilled in the art without departing from the disclosure. Accordingly, the present disclosure is intended to embrace all such alternatives, modifications, and variances that fall within the scope of the disclosure.

## Claims

1. A method for assembling a food package, comprising:
placing a lid film over a food product positioned on an absorbent pad in a food tray to enclose the food product and connecting the lid film to the food tray, wherein the absorbent pad comprises an active agent that generates an atmosphere-modifying gas, and wherein the lid film and the food tray create a headspace area;
removing ambient air from the headspace area;
injecting an atmosphere-modifying gas into the headspace area; and
adhering the lid film to the food tray to completely enclose the food product and the absorbent pad, and to form an airtight seal about the periphery of the food tray.

2. The method according to claim 1, further comprising:
generating the atmosphere-modifying gas by activation of the active agent, wherein the generated atmosphere-modifying gas is released into the headspace area after sealing the lid film and the food tray.

3. The method according to claim 2, wherein the generating of the atmosphere-modifying gas in the headspace area creates an internal gas pressure that prevents the lid film from contacting the food product.

4. The method according to claim 2, wherein the generating of the atmosphere-modifying gas in the headspace area reduces the possibility of collapse of the lid film onto the food product.

5. The method according to claim 2, wherein the atmosphere-modifying gas generated by the active agent replaces losses of gas volumes of the injected atmosphere-modifying gases.

6. The method according to claim 1, wherein the pad architecture comprises:
a top layer for contact with the food product;
a bottom layer opposite the top layer; and
a pocket formed between the top layer and the bottom layer,
wherein the active agent is in the pocket.

7. The method according to claim 6, wherein the pad architecture further comprises:
a first tissue layer adjacent the top layer, and
wherein the pocket is formed between any of:
the top layer and the first tissue layer;
the bottom layer and the first tissue layer; and/or
the top layer and the bottom layer.

8. The method according to claim 7, wherein the pad architecture further comprises:
a second tissue layer adjacent the bottom layer, and
wherein the pocket is formed between any of:
the first tissue layer and the second tissue layer;
the top layer and the first tissue layer;
the bottom layer and the second tissue layer; and/or
the top layer and the bottom layer.

9. The method according to claim 6, wherein the pad architecture provides a delayed activation of the active agent, and wherein the delayed activation of the active agent replenishes atmosphere-modifying gas volume in the food package to compensate for losses of initial injected gas volumes of the atmosphere-modifying gas, and extends shelf life of the food product.

10. The method according to claim 6, wherein the top layer is a film selected from the group consisting of polyethylene, polypropylene, polyester, a nonwoven material, and any combinations thereof.

11. The method according to claim 6, wherein the bottom layer is a nonwoven material.

12. The method according to claim 1, wherein the active agent is an atmosphere-modifying gas selected from the group consisting of nitrogen, oxygen, carbon dioxide, water vapor, carbon monoxide, and any combinations thereof.

13. The method according to claim 12, wherein the carbon dioxide generation system comprises an acid and a base.

14. The method according to claim 13, wherein the acid is boric acid.

15. The method according to claim 13, wherein the acid is an organic acid and the base is a carbonate.

16. The method according to claim 15, wherein the organic acid is citric acid and the carbonate is sodium bicarbonate.

17. The method according to claim 12, wherein the carbon dioxide generation system is in a laminate layer.

18. The method according to claim 1, wherein the one or more active agent is an antimicrobial.

19. The method according to claim 1, wherein the food package has smaller overall dimensions as compared with food packages prepared by conventional Modified Atmosphere Packaging.

20. The method according to claim 1, wherein the food package requires a smaller volume of injected atmosphere-modifying gas in the headspace area as compared with food packages prepared by conventional Modified Atmosphere Packaging techniques.

21. The method according to claim 1, wherein the lid film does not contact the food product.

22. The method according to claim 1, wherein the food product is selected from the group consisting of chicken, turkey, pork, and beef.

23. A method for assembling a food package, comprising:
placing an absorbent pad on a food tray having an interior side and an exterior side, the absorbent pad positioned on the interior side of the food tray, wherein the absorbent pad comprises an active agent that generates an atmosphere-modifying gas;
placing a food product on the absorbent pad;
placing a lid film over the food product positioned on the absorbent pad to connect the lid film to the food tray and enclose the food product, wherein the lid film and the food tray enclose a headspace area;
removing ambient air from the headspace area;
injecting an atmosphere-modifying gas into the headspace area; and
adhering the lid film to the food tray to completely enclose the food product and the absorbent pad, and to form an airtight seal about the periphery of the food tray.

24. The method according to claim 23, further comprising:
generating an atmosphere-modifying gas by activation of the active agent, wherein the generated atmosphere-modifying gas is released into the headspace area, after adhering the lid film to the food tray, to replenish losses of the injected atmosphere-modifying gas.
